**Europäisches Patentamt**

**European Patent Office**

**Office européen des brevets**

(19)

(11) Veröffentlichungsnummer: **0 281 937 B1**

(12) # EUROPÄISCHE PATENTSCHRIFT

(45) Veröffentlichungstag der Patentschrift:
**19.09.90**

(51) Int. Cl.⁵: **A61M 16/00**, G01F 13/00

(21) Anmeldenummer: **88103255.1**

(22) Anmeldetag: **03.03.88**

(54) Gasdosiervorrichtung, insbesondere für medizinische Apparate.

(30) Priorität: **12.03.87 DE 3707942**

(43) Veröffentlichungstag der Anmeldung:
**14.09.88 Patentblatt 88/37**

(45) Bekanntmachung des Hinweises auf die Patenterteilung:
**19.09.90 Patentblatt 90/38**

(84) Benannte Vertragsstaaten:
**CH DE ES FR GB IT LI**

(56) Entgegenhaltungen:
**DE-A- 2 506 893**
**DE-A- 3 229 328**
**DE-C- 3 345 585**

(73) Patentinhaber: **Drägerwerk Aktiengesellschaft,
Moislinger Allee 53-55, D-2400 Lübeck 1(DE)**

(72) Erfinder: **von dem Hagen, Tronje, Dr. rer. nat.,
Georg-Kerschensteiner-Strasse 7, D-2400 Lübeck(DE)**

## Beschreibung

Die Erfindung betrifft eine Gasdosiervorrichtung, insbesondere für medizinische Apparate, nach dem Oberbegriff des Patentanspruchs.

Eine derartige Gasdosiervorrichtung ist in der DE-C 33 45 585 beschrieben.

Mit der bekannten Gasdosiervorrichtung können sowohl geringe Mengen eines Gases bei niedriger Strömungsgeschwindigkeit als auch größere Mengen bei höherer Strömungsgeschwindigkeit von einer Gasquelle an einen Verbraucher dosiert abgegeben werden. Bei der Dosierung von kleinen Mengen wird ein Meßraum über ein Umschaltventil gefüllt, bis eine vorgebbare Druckdifferenz zu dem Druck in einem Vergleichsdruckraum erreicht ist. Danach schaltet das Umschaltventil um und läßt das Gas aus dem Meßraum über ein jetzt durchgängiges Absperrventil zum Verbraucher strömen. Bei Dosierungen von größeren Mengen bei entsprechend höherer Strömungsgeschwindigkeit wird parallel zum Meßraum über ein eigenes Erweiterungsventil ein Erweiterungsraum hinzugeschaltet und gefüllt. Wiederum schalten nach Erreichen der Druckdifferenz das Umschaltventil wie auch das Absperrventil in ihre Schaltstellung um, wobei jetzt sowohl der Meßraum als auch der Erweiterungsraum ihre dosierte Gasmenge dem Verbraucher zuleiten können.

Bei der bekannten Dosiervorrichtung erweist es sich als nachteilig, daß bei der Verwendung des zugeschalteten Erweiterungsraumes das Entleeren von Meßraum und Erweiterungsraum zum Verbraucher über drei Ventile erfolgen muß. Durch die dabei entstehenden hohen Spitzengasströme ergeben sich aufgrund der Gasflußwiderstände der Ventile dynamische Druckdifferenzen, welche die Genauigkeit der Dosierung beschränken und die maximale Dosierleistung bei vorgegebenen statischen Druckverhältnissen begrenzen.

Ferner wird das Umschaltventil vor dem Meßraum sowohl bei Dosierungen kleiner Mengen als auch bei Dosierung größerer Mengen unter Hinzuschaltung des Erweiterungsraumes grundsätzlich mit der Zyklusfrequenz geschaltet, wodurch extreme Anforderungen bezüglich geringer Durchflußwiderstände, kurzer Schaltzeiten und damit möglicher hoher Zyklusfrequenzen sowie einer großen Lebensdauer gestellt werden müssen. Das Umschaltventil muß zugleich für geringe Dosiermengen bei niedriger Strömungsgeschwindigkeit wie auch bei großen Dosierungsmengen bei hoher Strömungsgeschwindigkeit entsprechende Strömungscharakteristika aufweisen. Dies sind in einer einzigen Baueinheit schwer zu verwirklichende Forderungen.

Der Erfindung liegt somit die Aufgabe zugrunde, eine Gasdosiervorrichtung der genannten Art so zu verbessern, daß die Belastung der einzelnen Schaltelemente verringert wird und daß die Dosierung von geringen Gasmengen und hohen Gasmengen jeweils mit auch den unterschiedlichen Strömungsgeschwindigkeiten angepaßten Schaltelementen erfolgen kann.

Die Lösung der Aufgabe wird bei einer Gasdosiervorrichtung, insbesondere für medizinische Apparate, der genannten Art durch die im kennzeichnenden Teil des Patentanspruchs angegebenen Merkmale erreicht.

Die Vorteile der Erfindung liegen im wesentlichen darin, daß bei Dosierung geringerer Gasmengen bei kleineren Gasströmungen das Erweiterungsventil in seiner Grundstellung beharren kann und lediglich das Umschaltventil entsprechend dem eingestellten Schaltzyklus zum Füllen des Meßraumes in seine Grundstellung und zum Entleeren des Meßraumes in seine Schaltstellung gebracht werden muß. Der Erweiterungsraum bleibt dann ständig an die Gasversorgung angeschlossen und dient als zusätzlicher Pufferungsraum. Zur Dosierung größerer Gasmengen mit höheren Strömungsgeschwindigkeiten verbleibt das Meßraumventil ständig in seiner Grundstellung, so daß in diesem Falle sowohl Meßraum als auch Erweiterungsraum gefüllt und beide über das in Schaltstellung gebrachte Erweiterungsventil zu der Ausgangsleitung entleert werden. Somit schaltet bei jedem der beiden Dosierbereiche lediglich ein Umschaltventil, so daß die Entleerung von Meß- und Erweiterungsraum stets nur über zwei Ventile erfolgt.

Dies ist besonders für die Dosierung großer Gasmengen bei hohen Strömungsgeschwindigkeiten vorteilhaft, da die dadurch geringeren dynamischen Druckdifferenzen die Dosiergenauigkeit verbessern, höhere Spitzengasflüsse erlauben und damit die Dosierleistung erhöhen. Wenn niedere und hohe Gasflüsse annähernd gleich häufig benutzt werden, wird die Schaltarbeit der beiden Meßraum- und Erweiterungsventile geteilt, so daß sich mit deren Lebensdauer auch diejenige der Gasdosiervorrichtung erhöht.

Ein Ausführungsbeispiel wird anhand der einzigen schematischen Figur dargestellt und im folgenden näher erläutert.

Eine Dosiereinheit (3) wird mit Gas aus der Gasquelle (1) über einen Druckminderer (2) und eine Zuleitung (24) gespeist und gibt dosiertes Gas über einen Auslaß (4) an einen nicht dargestellten Verbraucher ab. Eine Steuereinheit (5) steuert die Dosiereinheit (3) aufgrund der Signale, welche sie von der Dosiereinheit (3) und der Sollwerteingabe (6) erhält. An einer Anzeige (7) werden die eingestellten Werte und evtl. Störungen angezeigt.

In der Dosiereinheit (3) ist ein Eingangspuffer (8) mit dem Druckminderer (2) über eine Rohrleitung und ein Druckraum (10) mit dem Eingangspuffer (8) über eine Drossel (9) verbunden. Der Eingangspuffer (8) besitzt weiterhin eine Verbindungsleitung zum Eingang eines Erweiterungsventils (20), welches in der dargestellten Grundstellung mit einem Erweiterungsraum (19) über die Rohrleitung (21) verbunden ist. Der Ausgang des Erweiterungsventils (20) ist über eine Ableitung (14) mit einem Absperrventil (15) in Verbindung gebracht. Die Rohrleitung (21) ist an den Eingang und die Ableitung (14) ist an den Ausgang eines Meßraumventils (11) angeschlossen, bei welchem in seiner dargestellten Grundstellung der Eingang mit einem Meßraum (13) verbunden ist. Sowohl der Druckraum (10) als auch der Meßraum (13) besitzen Verbindungsleitungen zu einem Differenzdruckaufnehmer (18), der ein Spannungssignal an die Steuereinheit (5) abgibt.

Hinter dem in der dargestellten Grundstellung abgesperrten Absperrventil (15) geht eine Verbraucherleitung (25) zu einem Ausgangspuffer 16 ab, der über eine Ausgangsdrossel (17) im Auslaß (4) mündet. Neben dem Signal aus dem Differenzdruckaufnehmer (18) empfängt die Steuereinheit (5) außerdem einen Temperaturwert, der über einen in dem Eingangspuffer (8) angeordneten Temperatursensor (22) die Eingangstemperatur des zu dosierenden Gases mißt und bei entsprechenden Temperaturschwankungen eine Korrekturmöglichkeit für die Dosiermenge an die Steuereinheit (5) liefert.

Für eine Dosierung einer vorgegebenen Gasmenge werden zu Beginn des Dosiervorganges die anfangs leeren Druckraum (10), Erweiterungsraum (19) und Meßraum (13) von der Gasquelle (1) mit einem Speisedruck über den Eingangspuffer (8) gefüllt. Dabei sind das Erweiterungsventil (20) und das Meßraumventil (11) in ihrer dargestellten Grundstellung. Während des Füllvorganges wird von dem Differenzdruckaufnehmer (18) eine vorgegebene Druckdifferenz zwischen Druckraum (10) und Meßraum (13) gemessen. Die Drossel (9) verhindert, daß mit dem Füllstoß des Meßraums (13) der Druck im Druckraum (10) vorübergehend unter den Betriebsdruck abfällt und dann durch den Differenzdruckaufnehmer (18) schon bei einem zu geringen Druck die Solldifferenz festgestellt und eine Umschaltung ausgelöst wird. Nach Erreichen einer vorgebbaren Druckdifferenz schaltet das Erweiterungsventil (20) in seine andere Schaltstellung um, so daß der Inhalt des Erweiterungsraumes (19) und des Meßraumes (13) in der Ableitung 14 vor dem noch gesperrten Absperrventil (15) anstehen. Nach einer gewissen Verzögerungszeit, die von der Steuereinheit (5) zur genauen Druckmessung vorgegeben ist, wird auch das Absperrventil (15) in seine Schaltstellung gebracht, und der Erweiterungsraum (19) und der Meßraum (13) können sich über den Ausgangspuffer (16) entleeren. Dabei sind große zu dosierende Gasmengen und hohe Strömungsgeschwindigkeiten einer genauen Dosierung nicht abträglich. Erst wenn der Druck im Meßraum (13) so weit abgesunken ist, daß eine weitere vorgebbare Druckdifferenz vom Druckaufnehmer (18) gemessen und an die Steuereinheit (5) weitergegeben wird, schaltet das Absperrventil (15) in seine Grundstellung zurück, und der Entleervorgang ist unterbrochen. Nach einer von der Steuereinheit gegebenen und durch die Zyklusfrequenz bestimmten Verzögerungszeit schaltet auch das Erweiterungsventil (20) in seine Grundstellung zurück, und der Dosierzyklus beginnt mit dem Füllvorgang von neuem.

Sollen nur kleine Gasmengen bei geringen Strömungsgeschwindigkeiten dosiert werden, wird, ausgehend von der dargestellten Grundstellung der Ventile (11, 20, 15) bei Erreichen des Fülldruckes nunmehr lediglich das Meßraumventil (11) in seine Schaltstellung gebracht, wodurch alleine das Volumen des Meßraumes (13) an dem noch gesperrten Absperrventil (15) ansteht. Nach Umschaltung des Absperrventils (15) in seine Schaltstellung kann sich der Inhalt des Meßraums (13) über die Verbraucherleitung (25) zum Auslaß (4) entleeren. Nach Absinken des Druckes im Meßraum (13) auf einen vorgebbaren Druckwert, der vom Differenzdruckaufnehmer (18) gemessen und an die Steuereinheit (5) weitergegeben wird, werden Absperrventil (15) und nach einer bestimmten Verzögerungszeit auch das Meßraumventil (11) wieder in ihre Grundstellung zurückgeschaltet, und der Füllvorgang beginnt von neuem.

Durch unabhängig voneinander steuerbare Variationen der Schaltzeiten von Erweiterungsventil (20) bzw. Meßraumventil (11) einerseits und dem Absperrventil (15) andererseits können unterschiedliche Füllzeiten und damit Dosiermengen sowie unterschiedliche Zykluszeiten für die Entleerung der jeweiligen Räume (13) und (19) erzielt werden.

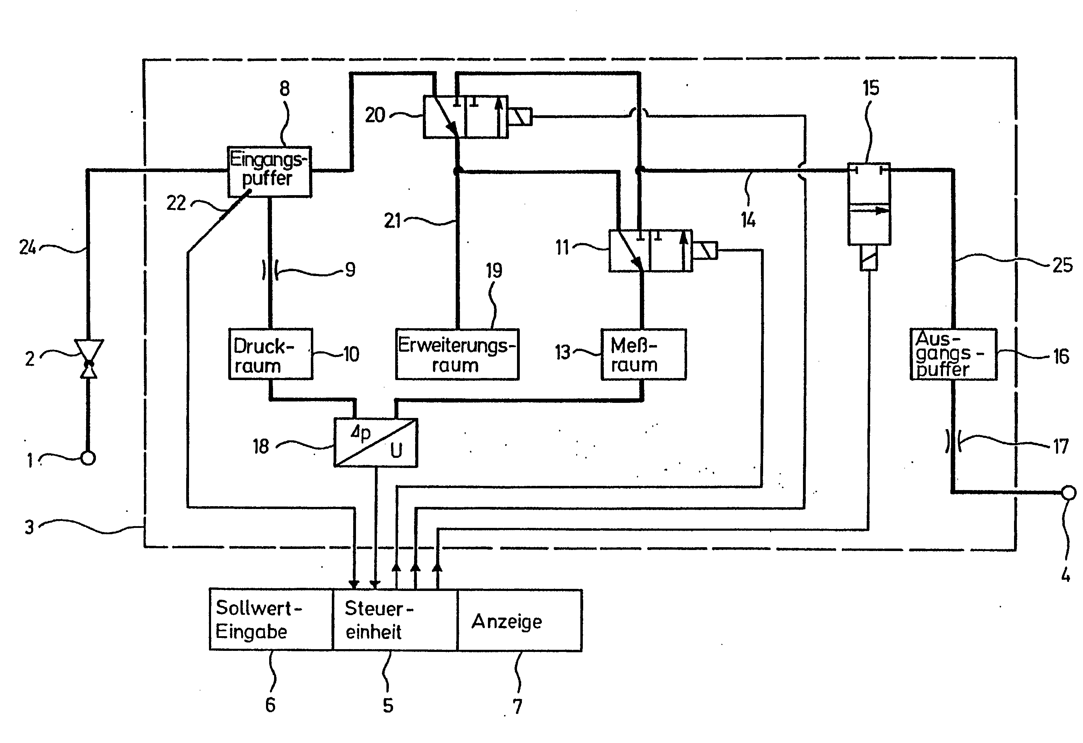

**Patentansprüche**

1. Gasdosiervorrichtung, insbesondere für medizinische Apparate, bei der in einer Dosiereinheit (3) ein Druckraum (10) über eine Zuleitung (24) fest mit der Gasversorgung (1) verbunden und parallel zu diesem über ein steuerbares Meßraumventil (11) als Umschaltventil ein Meßraum (13) wechselweise am Eingang mit der Zuleitung oder am Ausgang mit einer Ableitung (14, 25), in der sich ein steuerbares Absperrventil befindet, verbindbar ist und mit einem über ein steuerbares Erweiterungsventil (20) mit der Zu- oder Ableitung verbindbaren Erweiterungsraum (19), wobei die im Druckraum und Meßraum vorliegenden Druckwerte als Steuersignale über einen Differenzdruckaufnehmer (18) einer Steuereinheit (5) zuführbar sind, dadurch gekennzeichnet, daß der Erweiterungsraum (19) mit dem Eingang des Meßraumventils (11) verbunden und über das Erweiterungsventil (20) als Umschaltventil wechselweise mit der Zuleitung (24) oder mit der Ableitung (14, 25) verbindbar ist, wobei das Meßraumventil (11), das Erweiterungsventil (20) und das Absperrventil (15) durch die Steuereinheit derart gesteuert sind, daß

a) zum Zwecke einer Dosierung bei geringen Strömungen

aa) mit dem Meßraumventil (11) und dem Erweiterungsventil (20) in Grundstellung der Meßraum (13) und der Erweiterungsraum (19) mit der Gasversorgung (1) verbunden sind, wobei sich das Absperrventil (15) in abgesperrter Grundstellung befindet, bei Erreichen einer ersten vorgebbaren Druckdifferenz im Druckaufnehmer (18)

ab) mit dem Meßraumventil (11) und dem Absperrventil (15) in Schaltstellung der Meßraum (13) mit der Ableitung (14, 25) in Verbindung steht, wobei nach Erreichen einer weiteren, vorgebbaren Druckdifferenz das Absperrventil (15) und nachfolgend das Meßraumventil (11) wieder in Grundstellung gebracht sind und daß

b) zum Zwecke einer Dosierung bei hohen Strömungen

ba) ausgehend von der Grundstellung der Ventile (11, 15, 20) und nach Erreichen einer ersten vorgebbaren Druckdifferenz (18)

bb) mit dem Erweiterungsventil (20) und dem Absperrventil (15) in Schaltstellung sowohl der Meßraum (13) als auch der Erweiterungsraum (19) mit der Ableitung (14, 25) in Verbindung gebracht sind, wonach bei Erreichen einer weiteren, vorgebbaren Druckdifferenz das Absperrventil (15) und nachfolgend das Erweiterungsventil (20) wieder in Grundstellung gebracht sind.

## Claims

1. A gas dosing device, in particular for medical apparatus with which in a dosing unit (3) a pressure chamber (10) is firmly connected by way of a feed line (24) to the gas supply (1) and parallel to this by way of a controllable measuring chamber valve (11) as change over valve a measuring chamber (13) is able to be connected alternately at the input to the feed line or at the output to a delivery pipe (14, 25), in which a controllable shut-off valve is located, and with an expansion valve (19) able to be connected to the feed line and delivery pipe by way of a controllable expansion valve (20), wherein the pressure values present in the pressure chamber and measuring chamber are able to be supplied as control signals by way of a difference pressure sensor (18) of a control unit (5), characterised in that the expansion chamber (19) is connected to the input of the measuring chamber valve (11) and able to be connected by way of the expansion value (20) as change over valve alternately to the feed line (24) or to the delivery pipe (14, 25), wherein the measuring valve (11), the expansion valve (20) and the shut-off valve (15) are controlled by the control unit such that

a) for the purposes of dosing with small flows

aa) the measuring chamber (13) and the expansion chamber (19) with the gas supply (1) are connected to the measuring chamber valve (11) and the expansion valve (20) in the basic position, whereby the shut-off valve (15) is located in shut-off basic position, by reaching a first pressure difference able to be preset in the pressure sensor (18),

ab) the measuring chamber (13) with the delivery pipe (14, 25) is connected with the measuring chamber valve (11) and the shut-off valve (15) in the switched position, whereby after reaching a further, pressure difference which may be preset the shut-off valve (15) and subsequently the measuring chamber valve (11) are brought again into the basic position and that

b) for the purposes of dosing with high flows

ba) based on the basic position of the valves (11, 15, 20) and after reaching a first pressure difference (18) which may be preset

bb) the measuring chamber (13) as well as the expansion chamber (19) with the delivery pipe (14, 25) are brought into contact with the expansion valve (20) and the shut-off valve (15) in the switched position, whereafter when reaching a further predetermined pressure difference the shut-off valve (15) and subsequently the expansion valve (20) are again brought into the basic position.

## Revendications

1. Dispositif de dosage de gaz, en particulier pour appareils médicaux, dans l'unité de dosage (3) duquel un compartiment de pression (10), relié de manière fixe à l'alimentation en gaz (1), et parallèlement à ce compartiment, un compartiment de mesure (16), peuvent être alternativement reliés, respectivement par une conduite d'arrivée (24) et par une vanne de compartiment de mesure (11) commandée, servant de vanne de commutation, à l'entrée, avec la conduite d'arrivée ou à la sortie, avec une conduite de départ (14, 25) dans laquelle se trouve une vanne d'arrêt commandée et avec un compartiment d'extension (19), pouvant être relié à la conduite d'arrivée ou de départ, par une vanne d'extension (20) commandée, les valeurs de pression régnant dans le compartiment de pression et dans le compartiment de mesure pouvant être envoyées, sous la forme de signaux de commande, à une unité de commande (5), par un capteur de pression différentielle (18), caractérisé en ce que le compartiment d'extension (19) est relié à l'entrée de la vanne de compartiment de mesure (11) et peut être relié alternativement à la conduite d'arrivée (24) ou à la conduite de départ (14, 25), par la vanne d'extension (20) servant de vanne de commutation, la vanne de compartiment de mesure (11), la vanne d'extension (20) et la vanne d'arrêt (15) étant commandées par l'unité de commande, de manière que

a) pour un dosage à débit réduit

aa) la vanne de compartiment de mesure (11) et la vanne d'extension (20) étant en position de base, le compartiment de mesure (13) et le compartiment d'extension (19) sont reliés à l'alimentation en gaz (1), la vanne d'arrêt (15) se trouvant en position de base fermée lorsque la pression différentielle dans le capteur de pression (18) atteint une première valeur donnée,

ab) la vanne de compartiment de mesure (11) et la vanne d'arrêt (15) étant en position de commande, le compartiment de mesure (3) est relié à la conduite de départ (14, 25), la vanne d'arrêt (15) puis la vanne de compartiment de mesure (11) étant replacées en position de base, lorsque la pression différentielle atteint une autre valeur donnée et en ce que

b) pour un dosage à grand débit

ba) partant de la position de base des vannes (11, 15, 20) et après que la pression différentielle (18) atteint une première valeur donnée,

bb) la vanne d'extension (20) et la vanne d'arrêt (15) étant en position de commande, le compartiment de mesure (13) et le compartiment d'extension (19) sont reliés à la conduite de départ (14, 25), la vanne d'arrêt (15) puis la vanne d'extension (20) étant replacées en position de base, après que la pression différentielle atteint une autre valeur donnée.

EP 0 281 937 B1

Eingangs-puffer 8

20

22

24

9

21

11

15

25

2

Druck-raum 10

Erweiterungs-raum 19

Meß-raum 13

14

Aus-gangs-puffer 16

18 4p / U

17

1

3

4

| Sollwert-Eingabe | Steuer-einheit | Anzeige |

6

5

7